# EUROPEAN PATENT APPLICATION

(11) **EP 3 957 429 A1**
(43) Date of publication of application: **23.02.2022**
(21) Application number: 21191998.0
(22) Date of filing: 18.08.2021
(51) Int. Cl.: B23K 11/11, B23K 11/25, B23K 11/26, B23K 20/10, H01M 50/636, B23K 11/18, B23K 101/36

(54) **ELECTROSTATIC ENERGY STORAGE WELDING MACHINE**

(30) Priority: 19.08.2020 JP 2020138934
(71) Applicant: Nag System Co., Ltd., Settsu-shi, Osaka 566-0055 (JP)
(72) Inventor: NAGAMINE, Hidemasa, Settsu-shi, Osaka 566-0055 (JP); WADA, Keiji, Settsu-shi, Osaka 566-0055 (JP)
(74) Representative: Slingsby Partners LLP

(57) **Abstract**

An electrostatic energy storage welding machine for performing resistance welding while applying pressure to an object to be welded includes: a pair of welding electrodes; an energy storage section including a plurality of energy storage parts; an individual charge circuit for individually charging respective energy storage parts; an individual discharge circuit for individually discharging the respective energy storage parts; a voltage monitor circuit individually monitoring voltages of the respective energy storage parts; an individual voltage stabilization control section for performing control to further charge an energy storage part having deviation in performance in an individual manner to stabilize a voltage of that energy storage part and thereby achieve a set voltage; and an output circuit for outputting power produced by the set voltage stabilized through individual charging and electric current through individual discharging in the energy storage section to apply the electric current between the welding electrodes.

## Description

### CROSS REFERENCE TO THE RELATED APPLICATION

This application is based on and claims Convention priority to Japanese patent application No. 2020-138934, filed August 19, 2020, the entire disclosure of which is herein incorporated by reference as a part of this application.

### BACKGROUND OF THE INVENTION

### (Field of the Invention)

The present invention relates to an electrostatic energy storage welding machine.

### (Description of Related Art)

A conventionally known electrostatic energy storage welding machine includes an energy storage section including a plurality of large-capacity energy storage parts and is configured to perform resistance welding of an object to be welded by supplying large power while applying pressure to the object to be welded between welding electrodes. Such an electrostatic energy storage welding machine uses multiple energy storage parts such as large-capacity capacitors, which may have variation in performance.

This type of electrostatic energy storage welding machine allows a long electric current application period; however, in the case of resistance welding in which a large electric current is applied, it is difficult to control the power of this welding machine to obtain large power with a set voltage and a large electric current required for resistance welding. In addition, because of the large capacity, it takes time for discharging, so that it is difficult to speed up the process. For these reasons, it has been conventionally known to use various techniques to perform such control.

Where there is variation in performance among a plurality of capacitors, charging and discharging cycles performed between these capacitors possibly result in overcharging, overdischarging, or reverse-charging. To prevent this, it is known to individually discharge the respective capacitors (for example, Patent Document 1). This technique includes individually discharging the respective capacitors such that their voltages are equalized, and at the same time, monitoring overcharging and overdischarging to issue warning in order to prevent the capacitors from having variation. The individual discharging makes it possible to speed up the process to some extent.

It is also known to individually monitor the voltages of the respective large-capacity capacitors to improve safety, where the large-capacity capacitors have variation (for example, Patent Document 2).

### [Related Document]

### [Patent Document]

[Patent Document 1] JP Laid-open Patent Publication No. 2001-45607
[Patent Document 2] JP Laid-open Patent Publication No. 2020-68593

### SUMMARY OF THE INVENTION

The method of Patent Document 1, however, includes: assessing variation in performance among a plurality of capacitor banks each including a plurality of capacitors connected in series and parallel combination; and pausing a capacitor bank (or capacitor banks) having a large deviation and individually discharging the respective capacitors to equalize the voltages of the respective capacitors. Therefore, it takes time to eliminate the variation, making it difficult to achieve speeding up of the process. In addition, since this method includes pausing of a capacitor bank, it is necessary to provide an extra capacitor bank for substitution, which results in higher costs.

The method of Patent Document 2 includes monitoring the voltages of the respective capacitors. This method, however, merely detects overdischarging of a capacitor(s) having a deviation by discharging the entire system does not perform individual discharging, so that it is difficult to speed up the process.

An object of the present invention is to solve the above problem and provide an electrostatic energy storage welding machine capable of accommodating variation in performance among a plurality of energy storage parts and effectively outputting large power with a set voltage and a large electric current during welding so as to speed up resistance welding.

An electrostatic energy storage welding machine according to the present invention is configured to perform resistance welding of an object to be welded while applying pressure to the object to be welded, the electrostatic energy storage welding machine including:
a pair of welding electrodes configured to perform welding of the object to be welded by applying an electric current while applying pressure to the object to be welded;
an energy storage section including a plurality of energy storage parts;
an individual charge circuit configured to individually charge the plurality of energy storage parts;
an individual discharge circuit configured to individually discharge the respective energy storage parts;
a voltage monitor circuit configured to individually monitor voltages of the respective energy storage parts;
an individual voltage stabilization control section configured to perform control to further charge an energy storage part having a deviation in performance in an individual manner to stabilize a voltage of that energy storage part and thereby achieve a set voltage; and
an output circuit configured to output power produced by the set voltage stabilized through individual charging and an electric current through individual discharging in the energy storage section to apply the electric current between the welding electrodes.

According to this constitution, the voltages of the respective energy storage parts are individually monitored, and the respective energy storage parts are individually charged and discharged in a divided manner through individual charging and individual discharging. This makes it easy to match the voltage to the set voltage, so that the set voltage has a smaller error. At the same time, this also improves efficiency and makes it possible to shorten the time required for charging and discharging. Moreover, the energy storage part(s) having a deviation is further charged in an individual manner to stabilize the voltage of each energy storage part, so that the variation among the energy storage parts can be efficiently accommodated. Further, the individual discharging makes it possible to discharge the stored large power at high speed, so that production efficiency can be improved. Thus, it is possible to accommodate variation in performance among a plurality of energy storage parts and to efficiently output large power produced by a set voltage and a large electric current during welding so as to speed up resistance welding and improve the production efficiency.

In one embodiment of the present invention, the individual voltage stabilization control section may be configured to monitor the voltages of the respective energy storage parts which are individually charged, to further charge, among the energy storage parts, an energy storage part having an insufficient charging voltage due to its deviation in an individual manner to eliminate insufficiency and stabilize the voltage of that energy storage part, and thereby achieve the set voltage. In this case, each energy storage part having an insufficient charging voltage due to its variation can be charged in a concentrated manner, so that the charging time for eliminating the variation can be shortened, which further improves the production efficiency.

In one embodiment, the individual discharge circuit may be configured to individually discharge the respective energy storage parts of the energy storage section so as to prevent inflow of an electric current between the energy storage parts to retain a large electric current, and to shorten a time required for discharging the energy storage section. In this case, since inflow of an electric current between the energy storage parts is prevented, the large electric current can be more suitably retained, and the production efficiency can further be improved. In addition, the time for discharging can remarkably be shortened, as compared to the case where the entire energy storage section is discharged in a conventional manner.

The present invention encompasses any combination of at least two features disclosed in the claims and/or the specification and/or the drawings. In particular, any combination of two or more of the appended claims should be equally construed as included within the scope of the present invention.BRIEF

### DESCRIPTION OF THE DRAWINGS

The present invention will be more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like or corresponding parts throughout the several views. In the figures,
Fig. 1 is a schematic diagram showing an electrostatic energy storage welding machine according to an embodiment of the present invention;
Fig. 2 is a circuit diagram specifically showing a part of Fig. 1;
Fig. 3 illustrates an operation of resistance welding; and
Fig. 4 schematically illustrates an operation of individual voltage stabilization.

### DESCRIPTION OF THE EMBODIMENTS

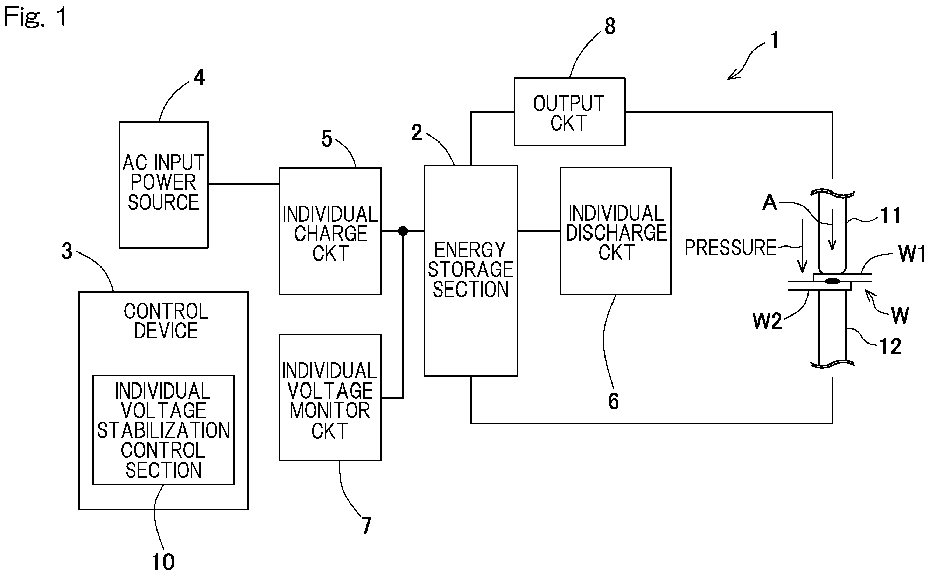

Hereinafter, an embodiment of the present invention will be described with reference to the drawings. Fig. 1 is a schematic diagram showing an electrostatic energy storage welding machine (hereinafter, simply referred to as "welding machine") 1 according to an embodiment of the present invention. The welding machine 1 includes an energy storage section 2 including a plurality of large-capacity energy storage parts C and is configured to perform resistance welding of an object W to be welded by supplying large power while applying pressure to the object W to be welded between welding electrodes. This welding machine is suitable in a case where there is variation in performance among the respective energy storage parts C and in a case of resistance welding which requires, e.g., conduction of a large electric current for a short period of time and speeding up of the production processes.

The welding machine 1 includes a pair of upper and lower welding electrodes 11, 12 which are movable in a vertical direction and a non-illustrated pressurizing actuator for applying pressure in the vertical direction to the object W to be welded which is placed between the welding electrodes 11, 12.

The welding machine 1 includes an input power source 4 (e.g. an AC 200V model), an individual charge circuit 5 for individually charging the plurality of energy storage parts C, an individual discharge circuit 6 for individually discharging the respective energy storage parts C, an individual voltage monitor circuit 7 for individually monitoring voltages of the respective energy storage parts C, an output circuit 8, and a control device 3. The control device 3 controls the entire welding machine 1, and besides, sets a voltage value and an electric current value of the large power necessary for resistance welding in accordance with the type of the object W to be welded and controls pressurization between welding electrodes 11, 12.

The control device 3 includes an individual voltage stabilization control section 10. The individual voltage stabilization control section 10 performs control to further charge an energy storage part having a deviation in an individual manner to stabilize the voltage of that energy storage part and thereby achieve a set voltage. The output circuit 8 outputs large power produced by the set voltage stabilized through individual charging and the large electric current through individual discharging in the energy storage section 2 to supply the power between the welding electrodes 11, 12.

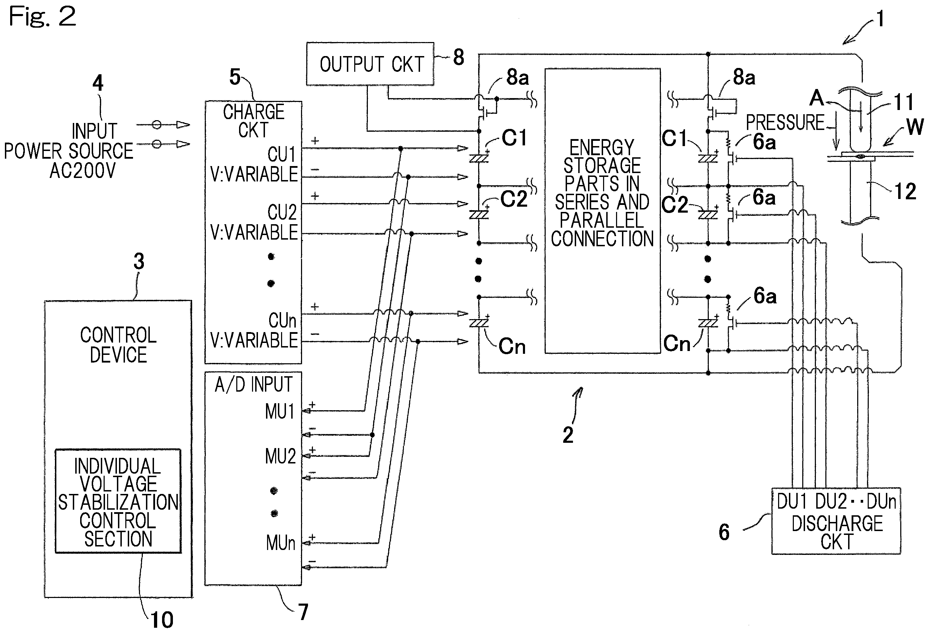

Fig. 2 is a circuit diagram specifically showing a part of Fig. 1. The energy storage parts C may be e.g. electric double-layer capacitors. The plurality of energy storage parts C are connected in series and parallel to constitute the energy storage section 2.

The individual charge circuit 5 for charging the energy storage section 2 includes a first unit CU1 to an n-th unit CUn for the respective energy storage parts C. The individual discharge circuit 6 for discharging the energy storage section 2 also includes a first unit DU1 to an n-th unit DUn for the respective energy storage parts C. The individual charge circuit 5 can set the voltages of the respective energy storage parts C in a variable manner in a range from e.g. 0 to 2.5 V The individual discharge circuit 6 includes discharge units 6a for the respective energy storage parts C, each of the discharge units having a switch such as a field effect transistor (FET). A first unit MU1 to an n-th unit MUn of an analog/digital (A/D) input type, which are included in the individual voltage monitor circuit 7, are connected between the first unit CU1 to the n-th unit CUn of the individual charge circuit 5 and the respective energy storage parts C. The output circuit 8 includes output units 8a each having a switch such as an FET and outputs large power in response to a non-illustrated output signal from the control device 3.

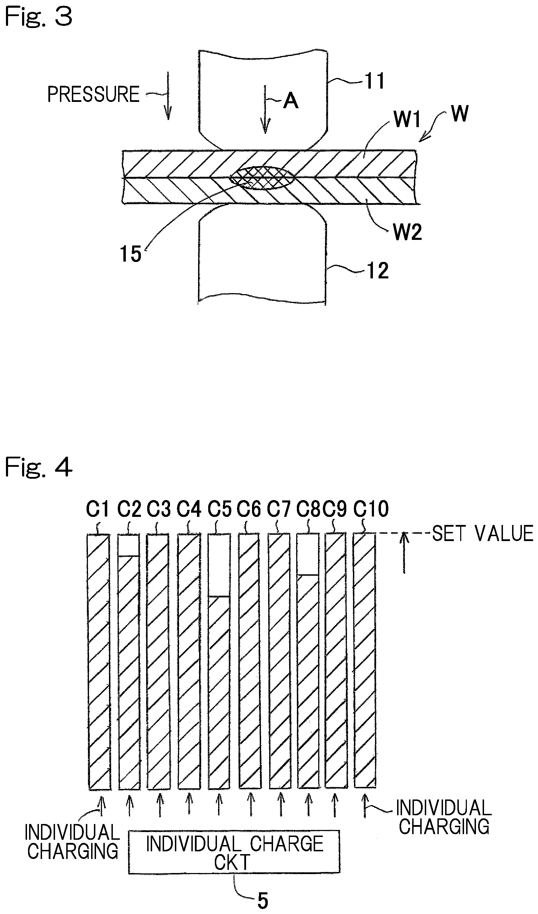

When the welding electrodes 11, 12 are brought into contact with metal materials W1, W2 of the object W to be welded and conducts an electric current while applying pressure to the object to be welded, the welding current A flows from the upper welding electrode 11 to the lower welding electrode 12 through the metal materials W1, W2. As a result of the electric current application, nugget (alloy layer) 15 is formed between the metal materials W1, W2 due to resistance heating as shown in Fig. 3, so that the metal materials are resistance-welded by melt-bonding.

In the resistance welding, thanks to use of a large-capacity power system including the large-capacity energy storage section 2, only a small voltage drop occurs during a short electric current application period, so that the set voltage and the large electric current can be maintained during the electric current application period. Since resistance welding is performed with a large electric current for a short period of time through melt-bonding by formation of the nugget (alloy layer) 15, with the set voltage and the large electric current in accordance with the object W to be welded being maintained, it is possible to efficiently weld the materials and to suppress influence due to heat on the object W to be welded.

The welding machine 1 individually monitors, on every occasion of resistance welding, the voltages of the respective energy storage parts C by the individual voltage monitor circuit 7, and charges and discharges the respective energy storage parts C in a divided manner through individual charging by the individual charge circuit 5 and individual discharging by the individual discharge circuit 6. This makes it easy to match the voltage to the set voltage, so that the set voltage has a smaller error. In addition, this also improves efficiency and makes it possible to shorten the time required for charging and discharging.

Further, the individual voltage stabilization control section 10 monitors the voltages of the respective energy storage parts C which are individually charged by the individual voltage monitor circuit 7 and further charges, among the energy storage parts C, an energy storage part(s) C having an insufficient charging voltage due to its deviation in performance in an individual manner to eliminate the insufficiency in order to stabilize the voltage of that energy storage part and thereby achieve the set voltage.

As shown in the schematic diagram of Fig. 4, for example, in a case where three energy storage parts C2, C5, C8 out of ten energy storage parts C1 to C10 exhibit deviations in performance, the other seven energy storage parts C1, C3 to C4, C6 to C7, C9 to C10 without such a deviation complete charging when their voltages reach the set value, and only the energy storage parts C2, C5, C8 having insufficient voltages due to the deviations are continuously charged in a concentrated manner in a short period of time. Thus, even where the energy storage parts have variation, the voltages can reach the set voltage and be stabilized in a short charging time, so that the variation can be eliminated. Therefore, the production efficiency can further be improved.

The individual discharge circuit 6 can individually discharge the respective energy storage parts C of the energy storage section 2 so as to prevent inflow of an electric current between the energy storage parts C to retain a large electric current, and to discharge the stored large power at high speed to remarkably shorten the discharging time. Thus, the production efficiency can further be improved. In addition, the time for discharging can remarkably be shortened, as compared to the case where the entire energy storage section is discharged in a conventional manner.

In this way, for every object W to be welded, the welding machine 1 individually monitors the voltages of the respective energy storage parts C by the individual voltage monitor circuit 7, charges and discharges the respective energy storage parts C in a divided manner through individual charging by the individual charge circuit 5 and individual discharging by the individual charge circuit 6, and further charges an energy storage part(s) C having a deviation in performance in an individual manner by the individual voltage stabilization control section 10 to stabilize the voltages. Thus, thanks to the combination of the operations of the respective circuits, it is possible to accommodate variation among a plurality of energy storage parts and efficiently output large power produced by a set voltage and a large electric current during welding. As a result, it is possible to speed up the production processes of resistance welding and improve the production efficiency. This makes it possible to promptly make adjustment to meet various welding conditions depending on the object W to be welded, so that the time required for different operations can be shortened, and the welding machine can be applied to high-mix low-volume production in which production occurs with frequent changes of different types of objects W to be welded.

The welding machine 1 can output large power, with only a small voltage drop occurring during electric current application. Thus, the welding machine can retain a large electric current, so that the welding machine can perform welding in the following cases where it has been difficult to carry out resistance welding.

That is, the welding machine 1 makes it possible to perform resistance welding even in cases where it has been conventionally difficult to perform welding, thanks to electric current application for a short period of time with a set voltage and a large electric current in accordance with an object W to be welded. Namely, the welding machine makes it possible to perform resistance welding over a wide area of an object W to be welded which is a flat braided wire of copper or aluminum with fraying ends; to perform resistance welding to multiple layers of objects W to be welded each including multiple layers of copper or aluminum; and to perform resistance welding to an object W to be welded (such as a copper strand) without causing damage due to pressurization or heating between the welding electrodes.

Further, high-speed discharging by individual discharging allows electric current application for a shorter period of time, so that resistance welding can be easily carried out between objects W to be welded such as between aluminum and aluminum and between copper and copper, which are generally difficult to weld together, as well as between copper and aluminum, which have poor heat balance therebetween, while ensuring welding quality.

As described above, the present invention can individually monitor the voltages of the respective energy storage parts, charge and discharge the respective energy storage parts in a divided manner through individual charging and individual discharging, and further charge an energy storage part(s) having a deviation in performance in an individual manner to stabilize the voltages. Thus, it is possible accommodate the variation among a plurality of energy storage parts and to efficiently output large power produced by a set voltage and a large electric current during welding so as to speed up resistance welding and improve the production efficiency.

It should be noted that the present embodiment is only exemplarily described with reference to objects which can now be welded by applying an electric current for a short period of time with a set voltage and a large electric current for producing large power by the welding machine 1. The description is not intended to limit the objects to be welded to these examples.

The present invention will not be limited to the above embodiments, and various additions, modifications, or deletions may be made without departing from the scope of the invention. Accordingly, such variants are included within the scope of the present invention.

### [Reference Numerals]

- 1 ····: electrostatic energy storage welding machine
- 2 ····: energy storage section
- 3 ····: control device
- 4 ····: AC input power source
- 5 ····: individual charge circuit
- 6 ····: individual discharge circuit
- 7 ····: individual voltage monitor circuit
- 8 ····: output circuit
- 10 ····: individual voltage stabilization control section
- 11, 12 ····: welding electrode
- W ····: object to be welded

## Claims

1. An electrostatic energy storage welding machine configured to perform resistance welding of an object to be welded while applying pressure to the object to be welded, the electrostatic energy storage welding machine comprising:
a pair of welding electrodes configured to perform welding of the object to be welded by applying an electric current while applying pressure to the object to be welded;
an energy storage section including a plurality of energy storage parts;
an individual charge circuit configured to individually charge the plurality of energy storage parts;
an individual discharge circuit configured to individually discharge the respective energy storage parts;
a voltage monitor circuit configured to individually monitor voltages of the respective energy storage parts;
an individual voltage stabilization control section configured to perform control to further charge an energy storage part having a deviation in performance in an individual manner to stabilize a voltage of that energy storage part and thereby achieve a set voltage; and
an output circuit configured to output power produced by the set voltage stabilized through individual charging and an electric current through individual discharging in the energy storage section to apply the electric current between the welding electrodes.

2. The electrostatic energy storage welding machine as claimed in claim 1, wherein the individual voltage stabilization control section is configured to monitor the voltages of the respective energy storage parts which are individually charged, to further charge, among the energy storage parts, an energy storage part having an insufficient charging voltage due to a deviation in an individual manner to eliminate insufficiency and stabilize the voltage of that energy storage part, and thereby achieve the set voltage.

3. The electrostatic energy storage welding machine as claimed in claim 1 or 2, wherein the individual discharge circuit is configured to individually discharge the respective energy storage parts so as to prevent inflow of an electric current between the energy storage parts to retain a large electric current, and to shorten a time required for discharging the energy storage section.
